# EUROPEAN PATENT APPLICATION

(11) **EP 4 525 086 A1**
(43) Date of publication of application: **19.03.2025**
(21) Application number: 23939997.5
(22) Date of filing: 31.07.2023
(51) Int. Cl.: H01M 4/505, H01M 4/525, H01M 4/131, C01G 45/00, H01M 10/0525

(54) **LITHIUM-RICH MANGANESE OXIDE POSITIVE ELECTRODE MATERIAL, PREPARATION METHOD THEREFOR, AND USE THEREOF, AND POSITIVE ELECTRODE SHEET AND USE THEREOF**

(71) Applicant: Beijing Easpring Material Technology Co., Ltd., Beijing 100160 (CN); Jiangsu Easpring Material Technology Co., Ltd., Linjiang New District, Haimen District Nantong, Jiangsu 226133 (CN)
(72) Inventor: WANG, Jun, Beijing 100160 (CN); RU, Minchao, Beijing 100160 (CN); ZHANG, Xuequan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2023/110393
(87) International publication number: WO 2025/025106

(57) **Abstract**

The present disclosure relates to the technical field of lithium-ion batteries, and discloses a lithium-rich manganese oxide cathode material, a preparation method and use thereof, and a positive electrode plate and use thereof. The cathode material has a chemical composition of *x*Li[Li_{1/3}(Mn_{1-*a*}M*ₐ*)_{2/3}]O₂·(1-*x*)LiMn_{1-*b*}M'*_{b}*O₂. An XRD spectrum of the cathode material has a diffraction peak P₍₁₎ in a range of a diffraction angle 2θ₁ satisfying [43.5(1-*x*)+44*x*]°≤2θ₁≤[44(1-*x)+45x]°;* and the XRD spectrum of the cathode material has a diffraction peak P₍₂₎ in a range of a diffraction angle 2θ₂ satisfying [17.7(1-*x*)+18.3*x*]°≤2θ₂≤[19.2(1-*x*)+19.8*x*]°, where 0.35≤x≤0.63. The cathode material has high first-cycle efficiency, high discharge capacity, high energy efficiency, high rate performance, and high cycle performance.

## Description

### FIELD

The present disclosure relates to the technical field of lithium-ion batteries, and more particularly, to a lithium-rich manganese oxide cathode material, a preparation method and use thereof, and a positive electrode plate and use thereof.

### BACKGROUND

In recent years, new energy vehicles, as a strategic emerging industry to cope with environmental pollution and energy crisis, exhibit a tendency of booming development. Lithium-ion batteries, as new energy carriers with excellent comprehensive performance, are widely used in markets such as electric vehicles, energy storage power stations, communications, digital electronic products, and the like.

In a lithium-ion battery, a positive electrode, as a core material, directly determines technical performance level of the battery. Among conventional lithium-ion cathode materials, LiCoO₂ is expensive and is mainly used in 3C digital electronic products; multi-element materials such as LiNi_{1-x-y}CoₓMn_{y}O₂ and LiNi_{1-x-y}CoₓAl_{y}O₂ have significantly improved cycle performance due to a synergistic effect between elements and thus they are widely used in new energy power batteries, but their energy density cannot meet people's demand for long battery life; LiFePO₄ has the advantages of low price, high safety performance, and long cycle life, and it is mainly used in the fields of power batteries and energy storage, but breakthrough in the improvement is difficult due to its low specific capacity, which is close to a theoretical value; and LiMn₂O₄ is inexpensive and prone to manganese dissolution and Jahn-Teller effect, resulting in poor high-temperature cycle performance, and is mainly used in two-wheeled vehicles and power tools. Layered lithium-rich manganese-based materials (LMR) are promising to become a new generation of cathode materials for lithium-ion batteries due to their advantages such as high specific capacity and low cost. However, their commercialization process is seriously affected by problems such as severe voltage decay, poor rate performance, low density, and unstable electrolyte under high voltage during the cycle.

Therefore, it is of great significance to develop new LMR materials with special microstructures and to enhance a solid solution effect of two phases of the LMR materials, for achieving long cycle life, high specific capacity, and high rate performance of batteries.

### SUMMARY

An object of the present disclosure is to overcome the problems in the related art that a lithium-rich manganese oxide cathode material has low first-cycle coulombic efficiency, low discharge capacity, low energy efficiency, poor rate performance, and poor cycle performance. Provided are a lithium-rich manganese oxide cathode material, a preparation method and use thereof, and a positive electrode plate and use thereof. The lithium-rich manganese metal oxide cathode material has high first-cycle efficiency, high discharge capacity, high energy efficiency, high rate performance, and high cycle performance.

In order to achieve the above-mentioned object, a first aspect of the present disclosure provides a lithium-rich manganese oxide cathode material. The cathode material has a chemical composition of *x*Li[Li_{1/3}(Mn_{1-*a*}M*ₐ*)_{2/3}]O₂·(1-*x*)LiMn_{1-b}M'*_{b}*O₂. An X-Ray Diffraction (XRD) spectrum of the cathode material obtained by XRD has a diffraction peak P₍₁₎ in a range of a diffraction angle 2θ₁ satisfying [43.5(1-*x*)+44*x*]°≤2θ₁≤[44(1-*x*)+45*x*]°, and the XRD spectrum of the cathode material obtained by XRD has a diffraction peak P₍₂₎ in a range of a diffraction angle 2θ₂ satisfying [17.7(1-*x*)+18.3*x*]°≤2θ₂≤[19.2(1-*x*)+19.8*x*]°, where *x* satisfies 0.35≤*x*≤0.63.

A second aspect of the present disclosure provides a preparation method of the above-mentioned lithium-rich manganese oxide cathode material. The preparation method includes: uniformly mixing a precursor containing manganese and M₁, a lithium source, and an additive optionally containing element M₂; and performing a two-stage heating sintering on the mixed material, to obtain the lithium-rich manganese oxide cathode material. An amount of the lithium source, an amount of the precursor, and an amount of the additive containing element M₂ enable n(Li)/[n(Mn)+n(M₁)+n(M₂)] to be in a range of 1.28 to 1.5. The two-stage heating sintering includes: heating from room temperature to a first sintering temperature at a first heating rate to perform a first sintering, and heating to a second sintering temperature at a second heating rate to perform a second sintering. The first heating rate is greater than or equal to the second heating rate.

A third aspect of the present disclosure provides a positive electrode plate. The positive electrode plate includes a positive electrode active material. The positive electrode active material includes a lithium-rich manganese oxide cathode material, a conductive agent, and a binder. A content of the lithium-rich manganese oxide cathode material is not smaller than 90 wt% based on a total weight of the positive electrode active material. The lithium-rich manganese oxide cathode material is the above-mentioned lithium-rich manganese oxide cathode material.

A fourth aspect of the present disclosure provides use of the above-mentioned lithium-rich manganese oxide cathode material or the above-mentioned positive electrode plate in a lithium-ion battery.

Based on the above-mentioned technical solutions, the lithium-rich manganese oxide cathode material, the preparation method and use thereof, and the positive electrode plate and use thereof according to the present disclosure have the following beneficial effects.
(1) The lithium-rich manganese oxide cathode material according to the present disclosure is a solid solution composite formed by a two-phase structure of monoclinic phase Li[Li_{1/3}(Mn_{1-*a*}M*ₐ*)_{2/3}]O₂ and hexagonal phase LiMn_{1-*b*}M'*_{b}*O₂, and the two-phase structure has a specific content ratio. In addition, the cathode material has a specific microstructure, allowing the cathode material to have high first-cycle efficiency, high discharge capacity, high energy efficiency, high rate performance, and high cycle performance.
(2) The lithium-rich manganese oxide cathode material according to the present disclosure adopts specific elements to achieve localized lattice substitution in the two phase structure, which can modulate an electronic structure of the two-phase microstructure of the material, form vacancy defects and enhance bond energy of a metal-oxygen bond. Moreover, transmission of electrons and ions can be facilitated, and release of oxygen under high voltage can be inhibited. Further, a structural reversible stability of the cathode material during an electrochemical cycle can be improved, thereby improving the discharge specific capacity, energy efficiency, rate performance, and cycle performance of the cathode material.

### BRIEF DESCRIPTION OF THE DRAWINGS

FIG. 1 is an XRD spectrum of a cathode material S-1 of Example 1;
FIG. 2 is an XRD spectrum of a cathode material S-2 of Example 2;
FIG. 3 is an XRD spectrum of a cathode material S-3 of Example 3;
FIG. 4 is an XRD spectrum of a cathode material S-4 of Example 4;
FIG. 5 is an XRD spectrum of a cathode material D-2 of Comparative Example 2;
FIG. 6 is an SEM image of a cathode material S-5 of Example 5;
FIG. 7 is a first-cycle charge-discharge curve graph of lithium-ion batteries respectively assembled by a cathode material S-1, a cathode material S-4, and a cathode material D-2;
FIG. 8 is a first-cycle charge-discharge curve graph of lithium-ion batteries respectively assembled by a cathode material S-1, a cathode material S-5, and a cathode material S-6;
FIG. 9 is a first-cycle charge-discharge curve graph of lithium-ion batteries respectively assembled by a cathode material S-5 and a cathode material D-3;
FIG. 10 is a voltage cycle graph of lithium-ion batteries respectively assembled by a cathode material S-1 and a cathode material S-5;
FIG. 11 is a capacity cycle graph of lithium-ion batteries respectively assembled by a cathode material S-1 and a cathode material S-5;
FIG. 12 is a voltage cycle graph of lithium-ion batteries respectively assembled by a cathode material S-1 and a cathode material D-2;
FIG. 13 is a capacity cycle graph of lithium-ion batteries respectively assembled by a cathode material S-1 and a cathode material D-2;
FIG. 14 is a voltage cycle graph of lithium-ion batteries respectively assembled by a cathode material S-5 and a cathode material D-3; and
FIG. 15 is a capacity cycle graph of lithium-ion batteries respectively assembled by a cathode material S-5 and a cathode material D-3.

### DETAILED DESCRIPTION

In the present disclosure, endpoints and any value of the ranges shall not be limited to the exact range or value, and those ranges or values should be understood to include values close to those ranges or values. For numerical ranges, endpoints of respective ranges, an endpoint and individual point value of respective ranges, and individual point values can be combined with each other to obtain one or more new numerical ranges, which should be deemed to be specifically disclosed herein.

A first aspect of the present disclosure provides a lithium-rich manganese oxide cathode material. The lithium-rich manganese oxide cathode material has a chemical composition of xLi[Li_{1/3}(Mn_{1-*a*}M*ₐ*)_{2/3}]O₂·(1-*x*)LiMn_{1-*b*}M'*_{b}*O₂. An XRD spectrum of the cathode material obtained by XRD has a diffraction peak P₍₁₎ in a range of a diffraction angle 2θ₁ satisfying [43.5(1-*x*)+44*x*]°≤2θ₁≤[44(1-*x*)+45*x*]°, and the XRD spectrum of the cathode material obtained by XRD has a diffraction peak P₍₂₎ in a range of a diffraction angle 2θ₂ satisfying [17.7(1-*x*)+18.3*x*]°≤2θ₂≤[19.2(1-*x*)+19.8*x*]°, where x satisfies 0.35≤*x*≤0.63.

In the present disclosure, the lithium-rich manganese oxide cathode material is a solid solution composite formed by a two-phase structure of monoclinic phase Li[Li_{1/3}(Mn_{1-*a*}M*ₐ*)_{2/3}]O₂ and hexagonal phase LiMn_{1-*b*}M'*_{b}*O₂, and the two-phase structure has a specific content ratio. In addition, the cathode material has a specific microstructure, allowing the cathode material to have high first-cycle efficiency, high discharge capacity, high energy efficiency, good rate performance, and excellent cycle performance.

Specifically, in the present disclosure, when positions of the diffraction peak P₍₁₎ and the diffraction peak P₍₂₎ in the XRD spectrum of the cathode material satisfy the above-mentioned conditions, it indicates an appropriate content ratio of the monoclinic phase Li[Li_{1/3}(Mn_{1-*a*}M*ₐ*)_{2/3}]O₂ to the hexagonal phase LiMn_{1-*b*}M'*_{b}*O₂ is, a good solid solution effect, and a stable structure, allowing the material to have high first-cycle efficiency, high discharge capacity, high energy efficiency, good rate performance, and excellent cycle performance.

In the present disclosure, the content ratio (x) of the monoclinic phase Li[Li_{1/3}(Mn_{1-*a*}M*ₐ*)_{2/3}]O₂ to the hexagonal phase LiMn_{1-*b*}M'*_{b}*O₂ in the lithium-rich manganese oxide cathode material is measured based on element measurement results of XRD and ICP, and then by a quantitative calculation.

Further, [43.6(1-*x*)+44*x*]°≤2θ₁≤[44(1-*x*)+45*x*]°.

Further, [17.8(1-*x*)+18.3*x*]°≤2θ₂≤[19.2(1-*x*)+19.8*x*]°.

Further, 0.4<x<0.55.

According to the present disclosure, 0≤*a*≤0.1, and 0.15<*b*<0.85; M is selected from at least one element of Nb, Ru, Mo, Co, Ti, and Zr; and M' is selected from at least one element of Ni, Co, Al, Zr, Nb, Ti, Sc, Y, Sn, Cr, W, Mg, Mo, Na, La, Os, Pr, Re, Ru, Sr, Sm, Ta, and B.

In the present disclosure, for specific values of the content ratio (*x*), *a,* and *b* in the chemical composition of the lithium-rich manganese oxide cathode material, the two-phase ratio (x) is determined according to a ratio of Li in the cathode material to other transition metal elements other than Li in the cathode material in the preparation method. If doping elements M₁ and M₂ can be doped into the two phases at the same time, doping amounts are distributed according to the ratio of the two phases. If M₁ and M₂ can only enter one phase, all of them are doped into the one phase. Specifically, in each phase, the doping elements substitute transition metal main elements according to the ratio of other transition metal main elements other than Li in the phase, and the specific values of *a* and *b* in each phase are determined.

In the present disclosure, the cathode material is a solid solution composite formed by a two-phase structure of monoclinic phase Li[Li_{1/3}(Mn_{1-*a*}M*ₐ*)_{2/3}]O₂ and hexagonal phase LiMn_{1-*b*}M'*_{b}*O₂. The inventors found based on research that: by directional element lattice substitution, Mn sites in Li[Li_{1/3}Mn_{2/3}]O₂ are substituted with M element (such as Nb, Ru, Mo, Co, Ti, or Zr, etc.) to obtain Li[Li_{1/3}(Mn_{1-*a*}M*ₐ*)_{2/3}]O₂; Mn sites in LiMnO₂ are substituted with M' element (such as Ni, Co, Al, Zr, Nb, Ti, Sc, Y, Sn, Cr, W, Mg, Mo, Na, La, Os, Pr, Re, Ru, Sr, Sm, or Ta, etc.) to obtain LiMn_{1-*b*}M'*_{b}*O₂ component; and the two-phase components Li[Li_{1/3}(Mn_{1-*a*}M*ₐ*)_{2/3}]O₂ and LiMn_{1-*b*}M'*_{b}*O₂ form a uniform and stable solid solution composite structure with a specific content ratio, i.e., the lithium-rich manganese oxide cathode material according to the present disclosure.

In the present disclosure, the inventors found based on research that: in the lithium-rich manganese oxide cathode material according to the present disclosure, due to the presence of directional element lattice substitution, a crystal structure of the cathode material can be effectively stabilized, a micro-area structure of the material can be improved, and the electrochemical performance of the material can be enhanced. For example, a partial substitution of Nb, Ru, and Mo at the Mn sites in Li[Li_{1/3}Mn_{2/3}]O₂ can form Nb-O bonds, Ru-O bonds, and Mo-O bonds with stronger bond energy, thereby stabilizing an oxidation reaction of O²⁻ anions during charge, inhibiting generation and precipitation of oxygen, and performing charge compensation during discharge to avoid deterioration of cycle performance caused by excessive generation of Mn³⁺. A partial substitution of Co, Ti, and Zr at the Mn sites in Li[Li_{1/3}Mn_{2/3}]O₂ can inhibit migration of manganese ions and enhance conductivity of the material, thereby improving the cycle performance and rate performance of the material. The introduction of M' elements (Ni, Co, Al, Zr, Nb, Ti, Sc, Y, Sn, Cr, W, Mg, Mo, La, Os, Pr, Re, Ru, Sr, Sm, Ta, and B, etc.) in LiMn_{1-*b*}M'*_{b}*O₂ can modulate a local electronic structure, stabilize the crystal structure of the material, and improve the first-cycle efficiency, discharge capacity, rate performance and cycle life of the material. Doping with elements such as Ti, Zr, Nb, La, W, Co, and B, lithium-containing compounds (such as LiNbO₃ or Li₂ZrO₃ or Li₄Ti₅O₁₂ or Li₃BO₃ or La NiO₃, etc.) may be formed on a surface of material particles or at an interface between the particles, thereby stabilizing a surface structure of the particles or an interface strength between the particles or a grain boundary structure between primary grains of the cathode material, and thereby prolonging cycle life of a lithium-ion battery containing the cathode material. Moreover, transmission of lithium ions between the particles and between the interfaces can be accelerated, and the rate performance and cycle performance of the lithium-ion battery containing the cathode material can be improved.

According to the present disclosure, the diffraction peak P₍₁₎ of the XRD spectrum of the cathode material in the range of the diffraction angle 2θ₁ has a full width at half maxima, FWHM₍₁₎, satisfying 0.35≤FWHM₍₁₎≤0.50.

In the present disclosure, when the full width at half maxima of the diffraction peak P₍₁₎ in a range of the diffraction angle 2θ₁ satisfies the above-mentioned range, it indicates that the material has an appropriate crystallinity, and the atomic arrangement is well ordered, thereby enabling a higher capacity, better rate performance, and better cycle performance. If the full width at half maxima is excessively great, the crystal structure is poor, the atomic arrangement is poorly ordered, and the electrochemical performance of the material may deteriorate significantly. If the full width at half maxima is excessively small, the crystallinity of the material is too good to increase a size of the primary particles, which increase the impedance and ion diffusion difficulty, resulting in poor capacity, rate performance, and cycle performance.

Further, the diffraction peak P₍₁₎ of the XRD spectrum of the cathode material in the range of the diffraction angle 2θ₁ has a half-peak width satisfying 0.38≤FWHM₍₁₎≤0.45.

According to the present disclosure, the diffraction peak P₍₂₎ of the XRD spectrum of the cathode material obtained by XRD in a range of the diffraction angle 2θ₂ has a half-peak width satisfying 0.17≤FWHM₍₂₎≤0.28.

Further, the diffraction peak P₍₂₎ of the XRD spectrum of the cathode material obtained by XRD in the range of the diffraction angle 2θ₂ has a full width at half maxima, FWHM₍₂₎, satisfying 0.18≤FWHM₍₂₎≤0.24.

According to the present disclosure, a peak area S₍₂₎ of the diffraction peak P₍₂₎ of the XRD spectrum of the cathode material in the range of the diffraction angle 2θ₂ and a peak area S₍₁₎ of the diffraction peak P₍₁₎ of the XRD spectrum of the cathode material in the range of the diffraction angle 2θ₁ satisfy: 1.1≤S₍₂₎/S₍₁₎≤1.8.

In the present disclosure, when a ratio of the peak area S₍₂₎ of the diffraction peak P₍₂₎ to the peak area S₍₁₎ of the diffraction peak P₍₁₎ satisfies the above-mentioned range, the material has more suitable two-phase solid solubility and two-phase content ratio, and simultaneously, the material has better crystallinity and thus exhibits good electrochemical performance.

Further, 1.2≤S₍₂₎/S₍₁₎≤1.7.

In the present disclosure, the full width at half maxima FWHM and peak area S of the diffraction peak are measured by XRD, and then the data is obtained by science Integral Int. Calculation software.

According to the present disclosure, the cathode material has a pallet density of ≥2.2 g/cm³, preferably, >2.5 g/cm³, and more preferably, >2.8 g/cm³.

According to the present disclosure, the cathode material has a specific surface area (SSA) satisfying 0.3 m²/g≤SSA≤3 m²/g, and preferably, 0.5 m²/g≤SSA≤2.5 m²/g.

According to the present disclosure, a content of surface Li₂CO₃ of the cathode material is smaller than or equal to 2,700 ppm, preferably, smaller than or equal to 2,400 ppm, and more preferably, smaller than or equal to 2,000 ppm; and a content of surface LiOH of the cathode material is smaller than or equal to 1,600 ppm, preferably, smaller than or equal to 1,400 ppm, and more preferably, smaller than or equal to 1,200 ppm.

A second aspect of the present disclosure provides a preparation method of the above-mentioned lithium-rich manganese oxide cathode material. The preparation method includes: uniformly mixing a precursor containing manganese and M₁, a lithium source, and an additive optionally containing element M₂; and performing a two-stage heating sintering on the mixed material, to obtain the lithium-rich manganese oxide cathode material. An amount of the lithium source, an amount of the precursor, and an amount of the additive containing element M₂ enable n(Li)/[n(Mn)+n(M₁)+n(M₂)] to be in a range of 1.28 to 1.5. The two-stage heating sintering includes: heating from room temperature to a first sintering temperature at a first heating rate to perform a first sintering, and heating to a second sintering temperature at a second heating rate to perform a second sintering. The first heating rate is greater than or equal to the second heating rate.

In the present disclosure, M and M' in the monoclinic phase Li[Li_{1/3}(Mn_{1-*a*}M*ₐ*)_{2/3}]O₂ and the hexagonal phase LiMn_{1-*b*}M'*_{b}*O₂ of the lithium-rich manganese oxide cathode material are derived from the element M₁ in the precursor and the additive containing the element M₂.

In the present disclosure, the inventors found based on research that: by modulating the lithium ratio of (n(Li)/[n(Mn)+n(M₁)+n(M₂)]) and the sintering scheme in the preparation method, the cathode material xLi[Li_{1/3}(Mn_{1-*a*}M*ₐ*)_{2/3}]O₂·(1-*x*)LiMn_{1-*b*}M'*_{b}*O₂ can be prepared, which is a solid solution composite formed by a two-phase structure of monoclinic phase Li[Li_{1/3}(Mn_{1-*a*}M*ₐ*)_{2/3}]O₂ and hexagonal phase LiMn_{1-*b*}M'*_{b}*O₂, and the two-phase content is controlled to be in a suitable ratio. The prepared cathode material exhibits excellent comprehensive performances, for example, high first-cycle coulombic efficiency, high discharge capacity, high energy efficiency, high rate performance, and high cycle performance. If the lithium ratio does not satisfy the range defined in the present disclosure, the two phases in the cathode material cannot form the stable solid solution structure, and phase separation occurs, resulting in a significant decrease in the first-cycle coulombic efficiency, discharge capacity, energy efficiency, rate performance, and cycle performance of the lithium-ion battery containing the cathode material.

In the present disclosure, the inventors found based on research that: by adopting the above-mentioned specific sintering steps for sintering, the cathode material *x*Li[Li_{1/3}(Mn_{1-*a*}M*ₐ*)_{2/3}]O₂·(1-*x*)LiMn_{1-*b*}M'*_{b}*O₂, which is the solid solution composite formed by the two-phase structure of monoclinic phase Li[Li_{1/3}(Mn_{1-*a*}M*ₐ*)_{2/3}]O₂ and hexagonal phase LiMn_{1-*b*}M'*_{b}*O₂, can be prepared, and the two-phase content is controlled to be in a suitable ratio. The prepared cathode material exhibits excellent comprehensive performances, for example, high first-cycle coulombic efficiency, high discharge capacity, high energy efficiency, high rate performance, and high cycle performance.

Further, an amount of the lithium source, an amount of the precursor, and an amount of the additive containing element M₂ enable n(Li)/[n(Mn)+n(M₁)+n(M₂)] to be in a range of 1.28 to 1.5, and preferably, 1.3 to 1.45.

According to the present disclosure, M₁ and M₂ are the same or different, and are each independently selected from at least one element of Ni, Co, Al, Zr, Nb, Ti, Sc, Y, Sn, Cr, W, Mg, Mo, Na, La, Os, Pr, Re, Ru, Sr, Sm, Ta, and B.

In the present disclosure, when the mixed material is sintered, the element M₁ and the element M₂ may perform directional element lattice substitution, for example, Nb, Ru, Mo, Co, Ti, or Zr may be directionally doped into the monoclinic phase Li[Li_{1/3}(Mn_{1-*a*}M*ₐ*)_{2/3}]O₂ and the hexagonal phase LiMn_{1-*b*}M'*_{b}*O₂, while the element M₁ and the element M₂ other than Nb, Ru, Mo, Co, Ti, or Zr may only be doped into the hexagonal phase LiMn_{1-*b*}M'*_{b}*O₂. In this way, the lithium-rich manganese oxide cathode material according to the present disclosure can be prepared.

In the present disclosure, the type of the additive containing element M₂ is not specifically limited, as long as the additives can provide element M₂. For example, the additive containing element M₂ may be at least one of oxides, hydroxides, oxyhydroxides, phosphates, fluorides, borides, and carbonates containing element M₂.

According to the present disclosure, the amount of the additive containing element M₂ and the amount of the precursor enable n(M₂)/[n(Mn)+n(M₁)+n(M₂)] to be in a range of 0 to 0.1.

In the present disclosure, when the amount of the additive containing element M₂ is controlled to satisfy the above-mentioned range, the element can be doped into an interior of the lattice as much as possible, and the doping is uniform, avoiding residue on the surface of the material and local enrichment. Thus, the material can exhibit higher capacity and better cycle performance.

Further, the amount of the additive containing element M₂ and the amount of the precursor enable n(M₂)/[n(Mn)+n(M₁)+n(M₂)] to be in a range of 0.001 to 0.05.

In the present disclosure, the element M₁ in the precursor is introduced by adding sulfate, chloride, nitrate, acetate, citrate, carbonate, phosphate, oxalate, or fluoride containing element M₁ during the coprecipitation of the precursor.

According to the present disclosure, the precursor has a chemical composition of Mn*_{ν}*M_{1γ}(OH)_{2±δ} or Mn*_{ν}*M_{1γ}CO₃, where 0.4≤*ν* ≤0.8, 0.2≤*γ*≤0.6, and 0≤*δ*≤0.1.

In the present disclosure, the preparation method of the precursor is not specifically limited, and the precursor may be prepared by a conventional method in the art.

In the present disclosure, the lithium source is not specifically limited. The conventional lithium sources in the art, such as at least one of lithium hydroxide, lithium carbonate, and lithium nitrate, may be used.

According to the present disclosure, during the two-stage heating sintering process, the second sintering temperature is controlled to range from 800°C to 1,050°C, and the two-stage heating sintering is performed in an oxygen-containing atmosphere.

Further, the two-stage heating sintering includes: heating from room temperature to the first sintering temperature at the first heating rate of >5°C/min to perform the first sintering, and heating to the second sintering temperature at the second heating rate of <5°C/min to perform the second sintering. The second sintering temperature ranges from 800°C to 1,050°C.

In the present disclosure, when the first heating rate and the second heating rate are further controlled to satisfy the above-mentioned ranges, the cathode material according to the present disclosure can have appropriate crystallinity and size of primary particles, orderly atomic arrangement, and at the same time, it is helpful for uniform lithiation during the reaction, thereby avoiding a situation where the material is lithium-rich on the outside and lithium-poor on the inside, and thereby enhancing the degree and effect of two-phase solid solubility. In this way, the prepared cathode material can exhibit excellent comprehensive performances, for example, high first-cycle coulombic efficiency, high discharge capacity, high energy efficiency, high rate performance, and high cycle performance.

Further, the first heating rate ranges from 5°C/min to 10°C/min, and the second heating rate ranges from 1°C/min to 4°C/min.

According to the present disclosure, the first sintering temperature ranges from 300°C to 600°C, and a first sintering duration ranges from 2 hours to 6 hours.

Further, the first sintering temperature ranges from 400°C to 550°C, and the first sintering duration ranges from 3 hours to 5 hours.

According to the present disclosure, the second sintering temperature ranges from 800°C to 1,050°C, and a second sintering duration ranges from 6 hours to 15 hours.

Further, the second sintering temperature ranges from 800°C to 950°C, and the second sintering duration ranges from 6 hours to 12 hours.

According to the present disclosure, the sintering is performed in an oxygen-containing atmosphere.

In the present disclosure, the oxygen-containing atmosphere is selected from one of air, a mixture of oxygen and air, or a mixture of air and carbon dioxide.

In a more preferred embodiment of the present disclosure, a ratio of lithium (n(Li)/[n(Mn)+n(M₁)+n(M₂)]), steps of the sintering, and types of M₁ and M₂ simultaneously satisfy the requirements of the present disclosure, which can further improve the comprehensive performances of the obtained cathode material.

A third aspect of the present disclosure provides a positive electrode plate. The positive electrode plate includes a positive electrode active material. The positive electrode active material includes a lithium-rich manganese oxide cathode material, a conductive agent, and a binder. A content of the lithium-rich manganese oxide cathode material is not smaller than 90 wt% based on a total weight of the positive electrode active material. The lithium-rich manganese oxide cathode material is the above-mentioned lithium-rich manganese oxide cathode material.

A fourth aspect of the present disclosure provides use of the above-mentioned lithium-rich manganese oxide cathode material or the above-mentioned positive electrode plate in a lithium-ion battery.

The present disclosure will be described in detail below by way of examples.

In the following examples and comparative examples, all raw materials are commercially available, unless otherwise specified.

All ratios and dosage ratios are molar ratios, unless otherwise specified.

In the following examples, the involved performances were obtained by the following ways.
(1) XRD phase test: test by means of a SmartLab 9kW X-ray diffractometer (X-ray wavelength is 0.154nm) from Rigaku Corporation, Japan, with a scanning range between 17° and 22° and between 42° and 47°, a step length of 0.02°, and a scanning speed of 1°/min.
(2) Specific surface area: obtained by means of Tristar II 3020 specific surface area tester from Micromertics, USA.
(3) Pallet density: obtained by means of MCP-PD51 powder impedance tester from Mitsubishi Chemical Corporation, Japan, with a test pressure of 20KN.
(4) Surface residual alkali test: measured by titration using a Swiss Metrohm Mystic intelligent potentiometric titrator, with 0.1 mol/L standard hydrochloric acid solution.
(5) Morphology test: test by means of S-4800 scanning electron microscope from Hitachi, Ltd, Japan.
(6) Electrochemical performance test:

The electrochemical performance of the prepared lithium-rich manganese oxide cathode material was obtained by testing 2025-type button batteries using NEWARE Battery Test System. Specifically:

### 1) The preparation process of a 2025-type button battery

Preparation of electrode plate: a lithium-rich manganese oxide cathode material, a conductive agent carbon black, and a binder polyvinylidene fluoride according to a mass ratio of 95:3:2 were fully mixed with an appropriate amount of N-methylpyrrolidone to prepare a uniform slurry, and the slurry was coated on an aluminum foil, dried at 120°C, rolled, and punched to form a positive electrode plate with a diameter of 11 mm.

Assembly of battery: a Li metal plate with a diameter of 17 mm and a thickness of 1 mm was used as a negative electrode; a polyethylene porous membrane with a thickness of 25 µm was used as a separator; and a mixture of equal amounts of 1 mol/L LiPF₆, ethylene carbonate (EC), and diethyl carbonate (DEC) was used as an electrolyte. The positive electrode plate, the separator, the negative electrode plate, and the electrolyte were assembled into a 2025-type button battery in an Ar glove box with a water content and an oxygen content of smaller than 5 ppm, and the battery at this moment was regarded as an unactivated battery.

### 2) Electrochemical performance test

The test conditions of the button battery were as follows. The button battery, after being prepared, was placed for 2 hours. After the open circuit voltage was stabilized, the battery was charged to a cut-off voltage of 4.6V with a current density of 0.1C at the positive electrode, next charged at a constant voltage with a current density of 0.02C for 30 minutes, and then discharged to a cut-off voltage of 2.0V at a same current density. The same method was repeated once, and the battery at this moment was regarded as an activated battery. At a voltage ranging from 2.0V to 4.6V and within a charge and discharge range from 2.0V to 4.6V, the activated battery was subjected to charge and discharge tests at 25°C and at 0.1C to evaluate the charge and discharge capacity of the material. The activated battery was subjected to charge and discharge tests at 0.1C, 0.2C, 0.33C, 0.5C, and 1C, and a ratio of 1C capacity to 0.1C capacity was used to evaluate the rate performance of the material. In the charge and discharge range from 2.0V to 4.6V, the cycle performance of the material after 80 charge and discharge cycles at 1C was evaluated.

The following preparation examples were used to illustrate the preparation of a precursor containing manganese and M₁ according to the present disclosure.

### Preparation Example 1

Manganese sulfate and nickel sulfate (with element M₁ being Ni) were dissolved according to a molar ratio of Mn to Ni of 2:1 to obtain a sulfate solution. Sodium hydroxide was dissolved to prepare an alkaline solution with a concentration of 6 mol/L, and ammonium hydroxide was dissolved to prepare a complexing agent solution with a concentration of 5 mol/L. Then, the sulfate solution, the alkaline solution, and the complexing agent solution were added into a 20L reactor in parallel for reaction. The stirring speed was kept constant at 600 rpm during the process. In the meantime, an inlet flow rate of the mixed salt solution was controlled to 300 mL/h, reaction pH was controlled to 11.6, reaction temperature was kept at 40°C, and a concentration of ammonia in the reaction system was controlled to be 2 g/L. The reaction was carried out in N₂ gas, and the reaction was stayed for 60 hours. The slurry obtained through crystallization reaction of the precipitate was subjected to solid-liquid separation and washing, and then dried at 105°C for 10 hours. A precursor material with a composition of Mn_{0.667}Ni_{0.333}(OH)₂ was obtained after sieving, which was recorded as P-1.

### Preparation Example 2

The precursor was prepared according to the same method as that of Preparation Example 1. Preparation Example 2 merely differed from Preparation Example 1 in the ratio of manganese sulfate to nickel sulfate. Specifically, manganese sulfate and nickel sulfate were dissolved according to a molar ratio of Mn to Ni of 3:2 to obtain a sulfate solution. A precursor material with a composition of Mn_{0.6}Ni_{0.4}(OH)₂ was obtained, which was recorded as P-2.

### Preparation Example 3

The precursor was prepared according to the same method as that of Preparation Example 1. Preparation Example 3 merely differed from Preparation Example 1 in the ratio of manganese sulfate to nickel sulfate. Specifically, manganese sulfate and nickel sulfate were dissolved according to a molar ratio of Mn to Ni of 3:1 to obtain a sulfate solution. A precursor material with a composition of Mn_{0.75}Ni_{0.25}(OH)₂ was obtained, which was recorded as P-3.

The following examples were used to illustrate a lithium-rich manganese oxide cathode material prepared according to the present disclosure.

### Example 1

The precursor P-1, lithium hydroxide, and additives Al₂O₃ and Co(OH)₂ were mixed evenly in a high-speed mixer according to n(Li):[n(Ni)+n(Mn)+n(Al)+n(Co)]=1.4, n(Al):[n(Ni)+n(Mn)+n(Al)+n(Co)]=0.002, and n(Co):[n(Ni)+n(Mn)+n(Al)+n(Co)]=0.002. In an air atmosphere, the temperature was first heated from room temperature to 400°C at a first heating rate of 5°C/min, maintained for 5 hours, then heated to 900°C at a second heating rate of 3°C/min, maintained for 10 hours, and naturally cooled, to obtain a cathode material S-1.

The cathode material S-1 had a chemical composition of 0.5Li[Li_{1/3}(Mn_{0.9976}Co_{0.0024})_{2/3}]O₂·0.5LiMn_{0.4423}Ni_{0.5529}Al_{0.0032}Co_{0.0016}O₂.

### Example 2

Example 2 adopted a similar method as in Example 1. Example 2 merely differed from Example 1 in the addition amount of the lithium salt, specifically, n(Li):[n(Ni)+n(Mn)+n(Al)+n(Co)]=1.3. A cathode material S-2 was obtained.

The cathode material S-2 had a chemical composition of 0.391Li[Li_{1/3}(Mn_{0.99745}Co_{0.00255})_{2/3}]O₂·0.609LiMn_{0.5214}Ni_{0.4740}Al_{0.0029}Co_{0.0017}O₂.

### Example 3

Example 3 adopted a similar method as in Example 1. Example 3 merely differed from Example 1 in the addition amount of the lithium salt, specifically, n(Li):[n(Ni)+n(Mn)+n(Al)+n(Co)]=1.45. A cathode material S-3 was obtained.

The cathode material S-3 had a chemical composition of 0.551Li[Li_{1/3}(Mn_{0.9976}Co_{0.0024})_{2/3}]O₂·0.449LiMn_{0.3919}Ni_{0.6029}Al_{0.0036}Co_{0.0016}O_{2.}

### Example 4

Example 4 adopted a similar method as in Example 1. Example 4 merely differed from Example 1 in the addition amount of the lithium salt, specifically, n(Li):[n(Ni)+n(Mn)+n(Al)+n(Co)]=1.5. A cathode material S-4 was obtained.

The cathode material S-4 had a chemical composition of 0.6Li[Li_{1/3}(Mn_{0.9976}Co_{0.0024})_{2/3}]O₂·0.4LiMn_{0.3314}Ni_{0.6630}Al_{0.004}Co_{0.0016}O₂.

### Example 5

Example 5 adopted a similar method as in Example 1. Example 5 merely differed from Example 1 in that, the precursor P-1, lithium hydroxide, and additive Co(OH)₂ were mixed evenly in a high-speed mixer according to n(Li):[n(Ni)+n(Mn)+n(Co)]=1.40 and n(Co):[n(Ni)+n(Mn)+n(Co)]=0.002. A cathode material S-5 was obtained.

The cathode material S-5 had a chemical composition of 0.5Li[Li_{1/3}(Mn_{0.9976}Co_{0.0024})_{2/3}]O₂·0.5LiMn_{0.4437}Ni_{0.5547}Co_{0.0016}O₂.

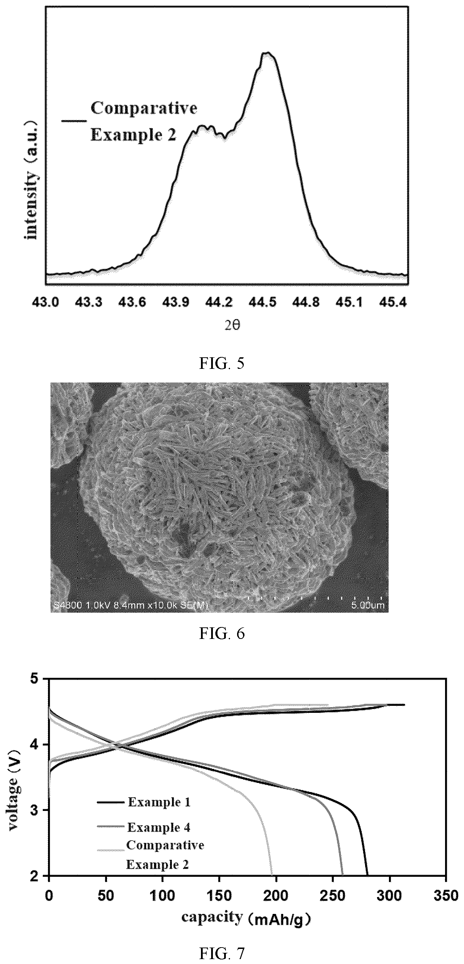

FIG. 6 is an SEM image of the cathode material S-5. As indicated in FIG. 6, the cathode material was spherical particles.

### Example 6

Example 6 adopted a similar method as in Example 1. Example 6 merely differed from Example 1 in that, the precursor P-1, lithium hydroxide, and additive Al₂O₃ were mixed evenly in a high-speed mixer according to n(Li):[n(Ni)+n(Mn)+n(Al)]=1.40 and n(Al):[n(Ni)+n(Mn)+n(Al)]=0.002. A cathode material S-6 was obtained.

The cathode material S-6 had a chemical composition of 0.5Li[Li_{1/3}(Mn₁)_{2/3}]O₂·0.5LiMn_{0.4429}Ni_{0.5538}Al_{0.0033}O₂.

### Example 7

Example 7 adopted a similar preparation method and conditions as in Example 1. Example 7 merely differed from Example 1 in that, the precursor P-1 and lithium hydroxide were mixed evenly in a high-speed mixer according to n(Li):[n(Ni)+n(Mn)]=1.40. A cathode material S-7 was obtained.

The cathode material S-7 had a chemical composition of 0.5Li[Li_{1/3}(Mn₁)_{2/3}]O₂·0.5LiMn_{0.4444}Ni_{0.5556}O₂.

### Example 8

The precursor P-2, lithium hydroxide, and additives tungsten oxide and titanium dioxide were mixed evenly in a high-speed mixer according to n(Li):[n(Mn)+n(Ni)+n(W)+n(Ti)]=1.35, n(W):[n(Mn)+n(Ni)+n(W)+n(Ti)]=0.002, and n(Ti):[n(Mn)+n(Ni)+n(W)+n(Ti)]=0.005. In an oxygen atmosphere, the temperature was first heated from room temperature to 600°C at a first heating rate of 8°C/min, maintained for 5 hours, then heated to 850°C at a second heating rate of 3°C/min, maintained for 10 hours, and naturally cooled, to obtain a cathode material S-8.

The cathode material S-8 had a chemical composition of 0.447Li[Li_{1/3}(Mn_{0.99355}Ti_{0.00645})_{2/3}]O₂·0.553LiMn_{0.3818}Ni_{0.6108}Ti_{0.0043}W_{0.0031}O₂.

### Example 9

The precursor P-3, lithium hydroxide, and additives molybdenum oxide and cobalt oxide were mixed evenly in a high-speed mixer according to n(Li):[n(Mn)+n(Ni)+n(Co)+n(Mo)]=1.38, n(Mo):[n(Mn)+n(Ni)+n(Co)+n(Mo)]=0.02, and n(Co):[n(Mn)+n(Ni)+n(Co)+n(Mo)]=0.05. In an air atmosphere, the temperature was first heated from room temperature to 500°C at a first heating rate of 10°C/min, maintained for 4 hours, then heated to 1,000°C at a second heating rate of 4°C/min, and maintained for 10 hours, to obtain a cathode material S-9.

The cathode material S-9 had a chemical composition of 0.479Li[Li_{1/3}(Mn_{0.9118}Co_{0.063}Mo_{0.0252})_{2/3}]O₂·0.521LiMn_{0.5617}Ni_{0.3795}Co_{0.042}Mo_{0.0168}O₂.

### Comparative Example 1

Comparative Example 1 adopted a similar method as in Example 1. Comparative Example 1 merely differed from Example 1 in the addition amount of the lithium salt, specifically, n(Li):[n(Ni)+n(Mn)+n(Al)+n(Co)]=1.55. A cathode material D-1 was obtained.

The cathode material had a chemical composition of 0.647Li[Li_{1/3}(Mn_{0.9976}Co_{0.0024})_{2/3}]O₂·0.353LiMn_{0.2577}Ni_{0.7362}Al_{0.0044}Co_{0.0016}O₂.

### Comparative Example 2

Comparative Example 2 adopted a similar method as in Example 1. Comparative Example 2 merely differed from Example 1 in the addition amount of the lithium salt, specifically, n(Li):[n(Ni)+n(Mn)+n(Al)+n(Co)]=1.25. A cathode material D-2 was obtained.

The cathode material had a chemical composition of 0.333Li[Li_{1/3}(Mn_{0.9973}Co_{0.0027})_{2/3}]O₂·0.667LiMn_{0.5531}Ni_{0.4424}Al_{0.0027}Co_{0.0018}O₂.

### Comparative Example 3

Comparative Example 3 adopted a similar method as in Example 5. Comparative Example 3 merely differed from Example 5 in that, the temperature was directly heated to 900° C at a rate of 5°C/min, and maintained for 10 hours, to obtain a cathode material D-3.

The cathode material had a chemical composition of 0.5Li[Li_{1/3}(Mn_{0.9976}Co_{0.0024})_{2/3}]O₂·0.5LiMn_{0.4437}Ni_{0.5547}Co_{0.0016}O₂.

### Comparative Example 4

Comparative Example 4 adopted a similar method as in Example 5. Comparative Example 4 merely differed from Example 5 in that, the temperature was first heated from room temperature to 400°C at a first heating rate of 3°C/min, maintained for 5 hours, then heated to 900°C at a second heating rate of 10°C/min, and maintained for 10 hours, to obtain a cathode material D-4. The cathode material had a chemical composition of 0.5Li[Li_{1/3}(Mn_{0.9976}Co_{0.0024})_{2/3}]O₂·0.5LiMn_{0.4437}Ni_{0.5547}Co_{0.0016}O₂.

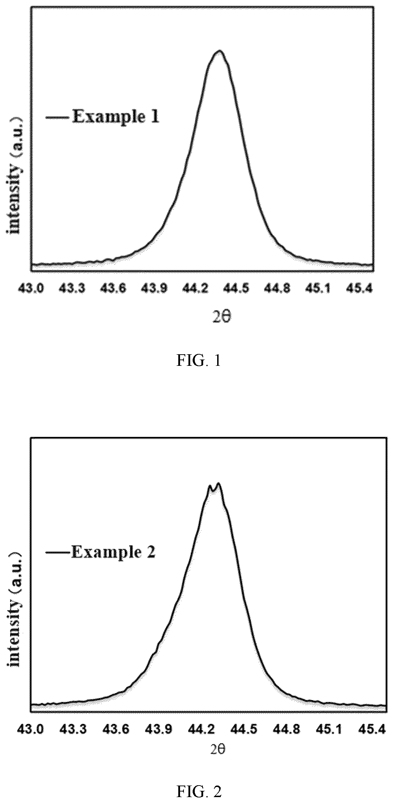

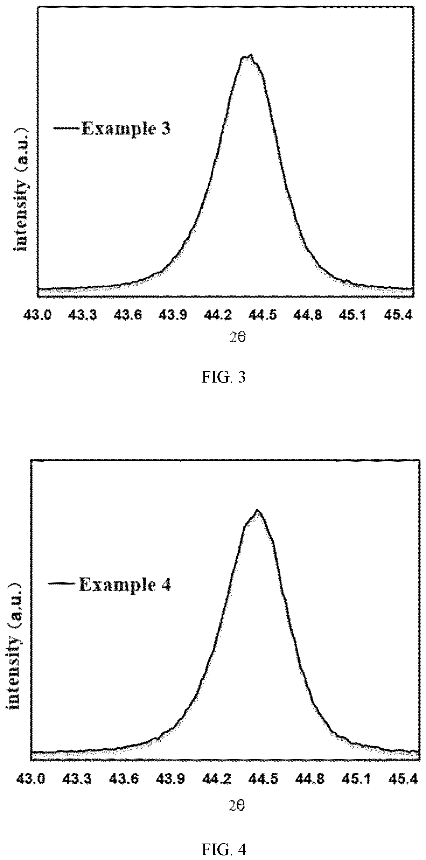

FIG. 1 to FIG. 5 show the XRD spectra of the cathode materials S-1 to S-4 of Example 1 to Example 4 and the cathode material D-2 of Comparative Example 2, respectively. It can be seen from FIG. 1 to FIG. 5 that the cathode materials according to the present disclosure had an appropriate two-phase ratio and a good two-phase solid solubility. Specifically, the P₍₁₎ peaks of the XRD spectra of the cathode materials of Example 1 to Example 4 are each in the form of single peak with good symmetry, while the peak in the XRD spectrum of the cathode material of Comparative Example 2 was split, indicating an inappropriate two-phase ratio and a poor two-phase solid solubility.

### Test Example 1

The structures and performances of the lithium-rich manganese oxide cathode materials prepared in Example 1 to Example 9 and Comparative Example 1 to Comparative Example 4 were tested, and the results were shown in Table 1.

**[Table 1]**

| Cathode material | P₍₁₎ | P₍₂₎ | FWHM₍₁₎ | FWHM₍₂₎ | S₍₂₎/S₍₁₎ | Pallet density (g/cm³) | Specific surface area (m²/g) | Li₂CO₃ (ppm) | LiOH (ppm) |
|---|---|---|---|---|---|---|---|---|---|
| S-1 | 44.383 | 18.606 | 0.412 | 0.202 | 1.5 | 2.72 | 1.7 | 1910 | 1060 |
| S-2 | 44.32 | 18.582 | 0.426 | 0.215 | 1.22 | 2.5 | 2.75 | 910 | 540 |
| S-3 | 44.41 | 18.63 | 0.42 | 0.197 | 1.55 | 2.59 | 0.66 | 2010 | 980 |
| S-4 | 44.438 | 18.645 | 0.397 | 0.188 | 1.67 | 2.65 | 0.38 | 2110 | 1260 |
| S-5 | 44.388 | 18.618 | 0.410 | 0.199 | 1.48 | 2.64 | 1.68 | 1870 | 990 |
| S-6 | 44.375 | 18.595 | 0.438 | 0.205 | 1.52 | 2.52 | 1.72 | 2120 | 1260 |
| S-7 | 44.392 | 18.605 | 0.417 | 0.203 | 1.47 | 2.45 | 1.88 | 2230 | 1320 |
| S-8 | 44.373 | 18.622 | 0.362 | 0.197 | 1.35 | 3.12 | 1.02 | 820 | 770 |
| S-9 | 44.38 | 18.631 | 0.414 | 0.19 | 1.45 | 2.24 | 0.97 | 650 | 480 |
| D-1 | 45.15 | 17.9 | 0.344 | 0.165 | 1.82 | 2.43 | 0.28 | 3480 | 1690 |
| D-2 | 43.6 | 19.422 | 0.525 | 0.292 | 1.08 | 2.38 | 2.86 | 1380 | 1080 |
| D-3 | 44.51 | 18.655 | 0.452 | 0.21 | 1.02 | 2.55 | 1.52 | 2720 | 1890 |
| D-4 | 44.505 | 18.63 | 0.422 | 0.205 | 1.08 | 2.58 | 1.60 | 2550 | 1810 |

It can be seen from the results in Table 1 that, compared with Comparative Example 1 to Comparative Example 4, Example 1 to Example 9 according to the present disclosure having P₍₁₎, P₍₂₎, FWHM₍₁₎, FWHM₍₂₎, and S₍₂₎/S₍₁₎ within the specified ranges of the present disclosure all have good electrochemical performances.

### Test Example 2

The lithium-rich manganese oxide cathode materials prepared in Example 1 to Example 9 and Comparative Example 1 to Comparative Example 4 were used as the positive electrode plate of the lithium-ion battery to prepare lithium-ion batteries. The performances of the lithium-ion batteries were tested, and the results were shown in Table 2.

**[Table 2]**

| | 0.1C discharge capacity (mAh/g) | 0.1C charge and discharge energy efficiency (%) | 1C discharge capacity (mAh/g) | 1C capacity /0.1C capacity (%) | Capacity retention rate (%) | Voltage retention rate (%) |
|---|---|---|---|---|---|---|
| Example 1 | 280.2 | 92.1 | 262 | 93.5 | 97.2 | 97.4 |
| Example 2 | 267.2 | 91.4 | 235.7 | 88.2 | 93.6 | 95.8 |
| Example 3 | 269.4 | 91.8 | 248.7 | 92.3 | 95 | 96.2 |
| Example 4 | 258.9 | 91.5 | 237.2 | 91.6 | 94.4 | 96 |
| Example 5 | 277.9 | 91.3 | 257.9 | 92.8 | 94.1 | 95.8 |
| Example 6 | 274.3 | 91.6 | 251 | 91.5 | 95.2 | 96.5 |
| Example 7 | 272.9 | 91.5 | 236.9 | 86.8 | 86.6 | 95.1 |
| Example 8 | 244.3 | 92.3 | 227.4 | 93.1 | 97.5 | 97.2 |
| Example 9 | 257.7 | 92 | 241.7 | 93.8 | 95.5 | 97.8 |
| Comparative Example 1 | 223.2 | 89.2 | 170.5 | 76.4 | 78.2 | 92.5 |
| Comparative Example 2 | 196.6 | 85.2 | 160.0 | 81.4 | 80.5 | 91.9 |
| Comparative Example 3 | 256.3 | 88.6 | 225.5 | 88.0 | 84.9 | 93.5 |
| Comparative Example 4 | 261.2 | 90.6 | 230.6 | 88.3 | 87.3 | 93.9 |

Table 2 reveals that, through comparison of Example 1, Example 2, Example 3, and Example 4, the capacity, energy efficiency, rate performance, and cycle performance of the cathode material can be modulated, and the performance is optimal when n(Li):[n(Ni)+n(Mn)+n(Al)+n(Co)]=1.4. The comparison between Example 1 and Example 5 indicates that the discharge capacity and cycle performance of the material can be significantly improved by doping Al in the hexagonal phase. The comparison between Example 1 and Example 6 indicates that the discharge capacity, rate performance, and cycle performance of the material can be significantly improved by doping Co in the monoclinic phase and the hexagonal phase. The comparison between Example 1 and Example 7 indicates that it plays an important role in improving the discharge capacity, rate performance, and cycle performance of the material by doping Co in the monoclinic phase and simultaneously doping Co and Al in the hexagonal phase. The comparison of Example 1 to Example 4 with Comparative Example 1 to Comparative Example 2 indicates that the two-phase content ratio has a great influence on the capacity, rate performance, and cycle performance of the material, and that the performances are significantly better when the two-phase content ratio falls within the range specified in the present disclosure. The comparison of Example 5 with Comparative Example 3 to Comparative Example 4 indicates that the two-stage sintering system and the appropriate heating rate can improve the capacity, rate performance, and cycle performance of the material.

The first-cycle charge-discharge curves of Example 1, Example 4, and Comparative Example 2 are shown in FIG. 7. As can be seen from FIG. 7, the lithium-ion batteries assembled by the cathode materials of Example 1 and Example 4 had significantly higher discharge capacity than that of Comparative Example 2, indicating that the appropriate two-phase content ratio and two-phase solid solubility are crucial to the performances of the material, otherwise the material will exhibit a very low capacity.

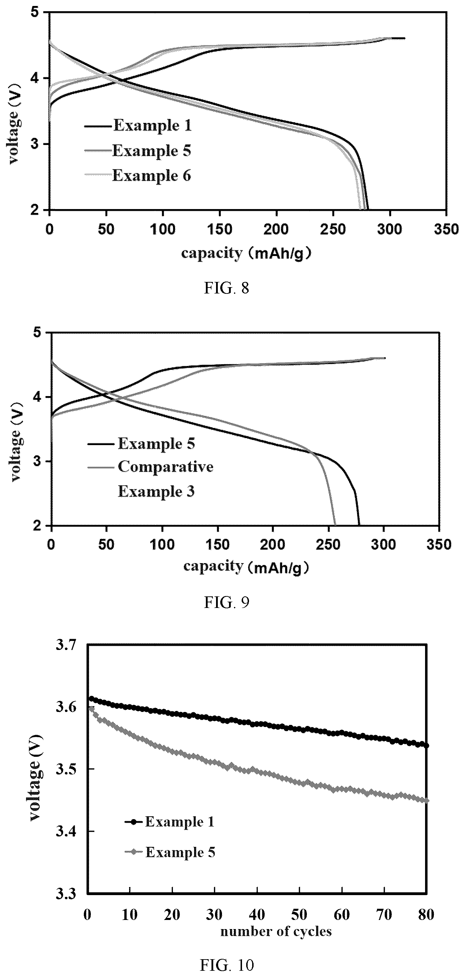

The first-cycle charge-discharge curves of Example 1, Example 5, and Example 6 are shown in FIG. 8. As can be seen from FIG. 8, compared with Example 1 and Example 5, by additionally doping Al in the hexagonal phase, the voltage difference between the charge and discharge decreased without a decrease in the discharge capacity, indicating that the polarization of the material was reduced, and the kinetics were improved. Compared with Example 1 and Example 6, by additionally doping Co lattice in the monoclinic phase and the hexagonal phase, the discharge capacity can be further enhanced and the kinetics of the material can be improved at the same time.

The first-cycle charge-discharge curves of Example 5 and Comparative Example 3 are shown in FIG. 9. As can be seen in FIG. 9, the discharge capacity of the material can be significantly improved by using two-stage heating and controlling the reaction rate.

FIG. 10 is a voltage cycle graph of lithium-ion batteries respectively assembled by the cathode material S-1 and the cathode material S-5. As can be seen from FIG. 10, the voltage retention rate of the cathode material can be effectively enhanced by additionally doping Al into the hexagonal phase.

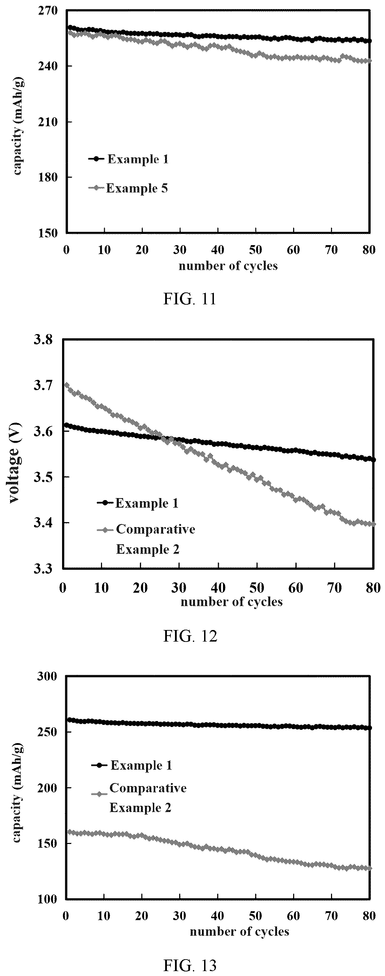

FIG. 11 is a capacity cycle graph of lithium-ion batteries respectively assembled by the cathode material S-1 and the cathode material S-5. As can be seen from FIG. 11, the capacity retention rate of the cathode material can be effectively enhanced by additionally doping Al into the hexagonal phase.

FIG. 12 is a voltage cycle graph of lithium-ion batteries respectively assembled by the cathode material S-1 and the cathode material D-2. As can be seen from FIG. 12, the voltage retention rate of the cathode material can be effectively enhanced by modulating the two-phase ratio and the two-phase solid solubility.

FIG. 13 is a capacity cycle graph of lithium-ion batteries respectively assembled by the cathode material S-1 and the cathode material D-2. As can be seen from FIG. 13, the capacity retention rate of the cathode material can be effectively enhanced by modulating the two-phase ratio and the two-phase solid solubility.

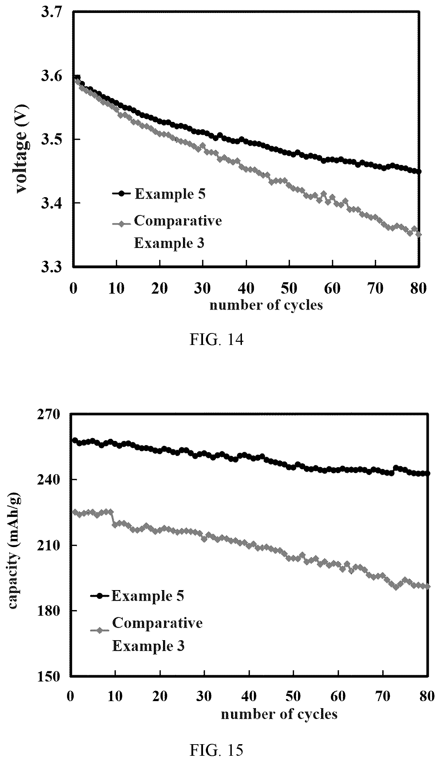

FIG. 14 is a voltage cycle graph of lithium-ion batteries respectively assembled by the cathode material S-5 and the cathode material D-3. As can be seen from FIG. 14, the voltage retention rate of the cathode material can be effectively enhanced by using two-stage heating and controlling the reaction rate.

FIG. 15 is a capacity cycle graph of lithium-ion batteries respectively assembled by the cathode material S-5 and the cathode material D-3. As can be seen from FIG. 15, the capacity retention rate of the cathode material can be effectively enhanced by using two-stage heating and controlling the reaction rate.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

## Claims

1. A lithium-rich manganese oxide cathode material, wherein:
the lithium-rich manganese oxide cathode material has a chemical composition of *x*Li[Li_{1/3}(Mn_{1-*a*}M*ₐ*)_{2/3}]O₂·(1-*x*)LiMn_{1-*b*}M'*_{b}*O₂;
an X-Ray Diffraction, XRD, spectrum of the cathode material obtained by XRD has a diffraction peak P₍₁₎ in a range of a diffraction angle 2θ₁ satisfying [43.5(1-*x*)+44*x*]°≤2θ₁≤[44(1-*x*)+45*x*]°; and
the XRD spectrum of the cathode material obtained by XRD has a diffraction peak P₍₂₎ in a range of a diffraction angle 2θ₂ satisfying [17.7(1-*x*)+18.3*x*]°≤2θ₂≤[19.2(1-*x*)+19.8*x*]°, *x* satisfying 0.35≤*x*≤0.63.

2. The lithium-rich manganese oxide cathode material according to claim 1, wherein: [43.6(1-*x*)+44*x*]°≤2θ₁≤[44(1-*x*)+45*x*]°; preferably, [17.8(1-*x*)+18.3*x*]°≤2θ₂≤[19.2(1-*x*)+19.8*x*]°; and preferably, 0.4<*x*<0.55.

3. The lithium-rich manganese oxide cathode material according to claim 1, wherein: 0≤*a≤*0.1, and 0.15≤*b*≤0.85;
M is selected from at least one element of Nb, Ru, Mo, Co, Ti, and Zr; and
M' is selected from at least one element of Ni, Co, Al, Zr, Nb, Ti, Sc, Y, Sn, Cr, W, Mg, Mo, Na, La, Os, Pr, Re, Ru, Sr, Sm, Ta, and B.

4. The lithium-rich manganese oxide cathode material according to any one of claims 1 to 3, wherein:
the diffraction peak P₍₁₎ of the XRD spectrum of the cathode material obtained by XRD in the range of the diffraction angle 2θ₁ has a full width at half maxima, FWHM₍₁₎, satisfying 0.35≤FWHM₍₁₎≤0.50, and preferably, 0.38≤FWHM₍₁₎≤0.45; and
preferably, the diffraction peak P₍₂₎ of the XRD spectrum of the cathode material obtained by XRD in the range of the diffraction angle 2θ₂ has a full width at half maxima, FWHM₍₂₎, satisfying 0.17≤FWHM₍₂₎≤0.28, and preferably, 0.18≤FWHM₍₂₎≤0.24.

5. The lithium-rich manganese oxide cathode material according to any one of claims 1 to 4, wherein a peak area S₍₂₎ of the diffraction peak P₍₂₎ of the cathode material obtained by XRD in the range of the diffraction angle 2θ₂ and a peak area S₍₁₎ of the diffraction peak P₍₁₎ of the cathode material obtained by XRD in the range of the diffraction angle 2θ₁ satisfy 1.1≤S_{S(2)}/S₍₁₎ ≤1.8, and preferably, 1.2≤S₍₂₎/S₍₁₎ <1.7.

6. The lithium-rich manganese oxide cathode material according to any one of claims 1 to 5, wherein:
the cathode material has a pallet density of >2.2 g/cm³, preferably, >2.5 g/cm³, and more preferably, >2.8 g/cm³;
preferably, the cathode material has a specific surface area, SSA, satisfying 0.3 m²/g≤SSA≤3 m²/g, and preferably, 0.5 m²/g≤SSA≤2.5 m²/g; and
preferably, a content of surface Li₂CO₃ of the cathode material is smaller than or equal to 2,700 ppm, preferably, smaller than or equal to 2,400 ppm, and more preferably, smaller than or equal to 2,000 ppm; and a content of surface LiOH of the cathode material is smaller than or equal to 1,600 ppm, preferably, smaller than or equal to 1,400 ppm, and more preferably, smaller than or equal to 1,200 ppm.

7. A preparation method of the lithium-rich manganese oxide cathode material according to any one of claims 1 to 6, the preparation method comprising:
uniformly mixing a precursor containing manganese and M₁, a lithium source, and an additive optionally containing element M₂, and
performing a two-stage heating sintering on the mixed material, to obtain the lithium-rich manganese oxide cathode material; wherein:
an amount of the lithium source, an amount of the precursor, and an amount of the additive containing element M₂ enable n(Li)/[n(Mn)+n(M₁)+n(M₂)] to be in a range of 1.28 to 1.5; and
the two-stage heating sintering comprises: heating from room temperature to a first sintering temperature at a first heating rate to perform a first sintering, and heating to a second sintering temperature at a second heating rate to perform a second sintering, where the first heating rate is greater than or equal to the second heating rate.

8. The preparation method according to claim 7, wherein:
the amount of the lithium source, the amount of the precursor, and the amount of the additive containing element M₂ enable n(Li)/[n(Mn)+n(M₁)+n(M₂)] to be in a range of 1.3 to 1.45;
preferably, M₁ and M₂ are the same or different, and are each independently selected from at least one element of Ni, Co, Al, Zr, Nb, Ti, Sc, Y, Sn, Cr, W, Mg, Mo, Na, La, Os, Pr, Re, Ru, Sr, Sm, Ta, and B;
preferably, the amount of the additive containing element M₂ and the amount of the precursor enable n(M₂)/[n(Mn)+n(M₁)+n(M₂)] to be in a range of 0 to 0.1, and preferably, 0.001 to 0.05; and
preferably, the precursor has a chemical composition of Mn*_{ν}*M_{1γ}(OH)_{2±δ} or Mn*_{ν}*M_{1γ}CO₃, where 0.4≤*ν* ≤0.8, 0.2≤*γ≤*0.6, and 0≤*δ*≤0.1.

9. The preparation method according to claim 7 or 8, wherein:
the two-stage heating sintering is performed in an oxygen-containing atmosphere;
preferably, the second sintering temperature is controlled to range from 800°C to 1,050°C;
preferably, the two-stage heating sintering comprises: heating from room temperature to the first sintering temperature at the first heating rate of >5°C/min to perform the first sintering, and heating to the second sintering temperature at the second heating rate of <5°C/min to perform the second sintering, where the second sintering temperature ranges from 800°C to 1,050°C;
preferably, the first sintering temperature ranges from 300°C to 600°C, and a first sintering duration ranges from 2 hours to 6 hours;
preferably, the second sintering temperature ranges from 800°C to 1,050°C, and a second sintering duration ranges from 6 hours to 15 hours; and
preferably, the sintering is performed in an oxygen-containing atmosphere.

10. A positive electrode plate, comprising a positive electrode active material, wherein:
the positive electrode active material comprises a lithium-rich manganese oxide cathode material, a conductive agent, and a binder;
a content of the lithium-rich manganese oxide cathode material is not smaller than 90 wt% based on a total weight of the positive electrode active material; and
the lithium-rich manganese oxide cathode material is the lithium-rich manganese oxide cathode material according to any one of claims 1 to 6.

11. Use of the lithium-rich manganese oxide cathode material according to any one of claims 1 to 6 or the positive electrode plate according to claim 10 in a lithium-ion battery.
